# EUROPÄISCHE PATENTSCHRIFT

(11) **EP 2 078 490 B1**
(45) Veröffentlichungstag und Bekanntmachung des Hinweises auf die Patenterteilung: **24.01.2018**
(21) Anmeldenummer: 09000084.5
(22) Anmeldetag: 07.01.2009
(51) Int. Cl.: A47L 9/26

(54) **Elektrogerät mit einem verbesserten Kabelwickelsystem und Verfahren zum Betreiben eines Elektrogeräts**
Electrical device with an improved cable coiling system and method for operating such an electrical device
Appareil électrique doté d'un système d'enroulement de câble amélioré et procédé de fonctionnement d'un tel appareil électrique

(30) Priorität: 11.01.2008 DE 102008004134
(43) Veröffentlichungstag der Anmeldung: 15.07.2009
(73) Patentinhaber: Miele & Cie. KG, 33332 Gütersloh (DE)
(72) Erfinder: Berends, Erik, 33729 Bielefeld (DE); Koch, Stephan, 32756 Detmold (DE); Wegener, Dirk, 33649 Bielefeld (DE)

(56) Entgegenhaltungen:
- FR-A- 1 415 191
- JP-A- 7 155 277
- JP-A- 7 171 079
- US-A1- 2006 196 688

## Beschreibung

Die vorliegende Erfindung betrifft ein Elektrogerät mit einem Kabelwickelsystem, insbesondere handbetriebenes Elektrogerät wie ein Staubsauger oder dergleichen, das eine Kabeltrommel aufweist, die zur Auf- und Abwicklung eines Anschlusskabels drehbar gelagert ist, wobei zum Antrieb der Kabeltrommel eine Antriebseinrichtung mit einem elektrischen Motor vorgesehen ist, der mit der Kabeltrommel antreibend in Wirkverbindung steht. Die Erfindung betrifft außerdem ein Verfahren zum Betreiben eines solchen Elektrogeräts.

Kabelwickelsysteme sind für handbetriebene Elektrogeräte wie beispielsweise Staubsauger bekannt, aus denen das Anschlusskabel manuell herausgezogen wird, um das Elektrogerät in Betrieb zu nehmen. Nach der beendeten Inbetriebnahme dient eine Antriebseinrichtung dazu, die Kabeltrommel in Drehbewegung zu versetzen und das Anschlusskabel wieder aufzuwickeln, so dass dieses in das Elektrogerät wieder eingezogen wird. Derartige Kabelwickelsysteme sind meist im Gehäuse des handbetriebenen Elektrogerätes integriert, wobei die Antriebseinrichtung zum Drehantrieb der Kabeltrommel über einen am Elektrogerät angeordneten mechanischen Taster aktivierbar ist. Ein Staubsauger mit einem Kabelwickelsystem ist aus der Druckschrift DE 10 2005 018 008 B4 bekannt. Das System umfasst einen mechanischen Antrieb in Form einer Wickelfeder, von der das eine Ende an einem umlaufenden Steg und der drehbaren Kabeltrommel und das andere Ende an einer ortsfesten Achse einer zugeordneten Federtrommel befestigt ist. Die Federtrommel ist meist in einem separaten Gehäuse an der Halterung der Kabeltrommel gelagert. Wird nun durch einen manuellen Auszug des Anschlusskabels die Kabeltrommel gedreht, so wickelt sich die Feder um den Steg und wird somit in eine gespannte Lage überführt. Um die gespannte Lage der Feder aufrecht zu erhalten, ist eine Bremseinrichtung vorgesehen. Nach dem Lösen der Bremseinrichtung läuft die gespannte Feder selbsttätig in das separate Gehäuse zurück, um dadurch die Kabeltrommel anzutreiben, wodurch das Anschlusskabel wieder aufgewickelt und in das Gehäuse des Elektrogerätes eingezogen wird. Die Bremseinrichtung kann aus einer Kabelbremse bestehen, die über einen Bremshebel gegen die Wickelwirkung der Feder deaktiviert wird, wobei der Bremshebel über den mechanischen Taster betätigt werden kann. Folglich kann der Bediener durch Tastendruck das Aufwickeln des Anschlusskabels aktivieren und beliebig unterbrechen. Bei den bekannten mechanischen Antriebseinrichtungen für Kabelwickelsysteme entsteht das Problem, dass eine Kraft durch den Benutzer aufgebracht werden muss, um das Kabel aus dem Elektrogerät herauszuziehen, weil dabei die Wickelfeder vorgespannt wird, um als Energiespeicher für den nachfolgenden Einzug des Anschlusskabels zu dienen. Häufig muss beim manuellen Herausziehen des Anschlusskabels das Elektrogerät festgehalten werden, was vom Benutzer als nachteilig empfunden wird. Beim Einziehen des Anschlusskabels durch die Wickelfeder entsteht häufig eine zu hohe Drehgeschwindigkeit der Kabeltrommel, so dass das Anschlusskabel sehr schnell in das Elektrogerät zurückgezogen wird. Beim Erreichen des Endes des Anschlusskabels entsteht folglich ein Peitscheneffekt, welcher vom Benutzer ebenfalls als nachteilig empfunden wird. Wird die Wickelfeder mit einer Federkonstanten ausgeführt, die ein schwaches Drehmoment auf die Kabeltrommel bewirkt, so kann nicht sichergestellt sein, dass das Anschlusskabel zuverlässig in das Elektrogerät zurückgezogen wird. Eine Verstärkung der Federkonstanten der Wickelfeder bewirkt hingegen eine übermäßige Einzugskraft des Anschlusskabels, was zu den genannten Nachteilen führt. Außerdem führt ein Zug am vollständig abgewickelten Kabel zu einer übermäßigen Beanspruchung der Feder, wodurch sie brechen kann.

Aus der DE 30 27 119 A1 ist eine Kabeltrommel bekannt, bei welcher die Wickelfeder mit Hilfe eines Motors gespannt wird. Hier besteht nach wie vor das Problem, dass die Wickelfeder brechen kann. Außerdem wird eine Kupplungsvorrichtung verwendet, welche bei Verschleiß den Defekt des gesamten Aufwickelsystems bewirkt.

Die EP 0 289 475 A2 beschreibt eine motorbetriebene Kabeltrommel. Zum Ein- und Ausschalten des Motors wird ein von der drehbaren Kabeltrommel betätigter Schalter verwendet. Dies führt zu einem komplizierten mechanischen Aufbau.

Aus der JP 56017873 A ist ein Elektrogerät mit einer Kabeltrommel bekannt. Dort erfolgt die Auf- und Abwicklung des Kabels von zwei motorbetriebenen Zugrollen.

In der JP 7 155 277 A ist ein Staubsauger mit einem Kabelwickelsystem offenbart. Dort wird zum Abwickeln des Kabels ein Motor verwendet, welcher das Kabel von einer Kabeltrommel zieht. Dabei wird eine Wickelfeder in der Kabeltrommel gespannt, welche nach dem Lösen einer Bremse die Kabeltrommel zurückdreht und das Kabel aufwickelt

Die US 2006/196688 A1 zeigt eine Kabeltrommel für ein motorbetriebenes Gerät, welche in ihrem Inneren einen Motor aufnimmt. Als Beispiel für einen solchen Motor ist hier der Gebläsemotor eines Staubsaugers genannt. Der Motor ist nicht dazu vorgesehen, die Kabeltrommel zu drehen.

Die FR 1 415 191 A zeigt einen Staubsauger mit einer Kabeltrommel. Hier wird der Gebläsemotor als Antriebsmotor für die Kabeltrommel verwendet. Er wird über eine Kupplung mit der Kabeltrommel verbunden.

Es ist Aufgabe der vorliegenden Erfindung, ein Elektrogerät mit einem motorbetriebenen Kabelwickelsystem zu schaffen, das einen einfachen Aufbau und eine benutzerfreundliche Handhabung aufweist.

Diese Aufgabe wird ausgehend von einem Elektrogerät mit einem Kabelwickelsystem gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Außerdem ist es die Aufgabe der Erfindung, benutzerfreundliche Verfahren zum Betreiben eines solchen Elektrogeräts mit verschiedenen Gebrauchsvorteilen zu offenbaren. Diese Aufgabe wird durch Verfahren mit den Merkmalen der Ansprüche 12 bis 15 gelöst.

Die Erfindung schließt die technische Lehre ein, dass die Antriebseinrichtung einen elektrischen Motor aufweist, der mit der Kabeltrommel antreibend in Wirkverbindung steht.

Erfindungsgemäß wird ein neues Konzept eines Kabelwickelsystems vorgeschlagen, das zur selbsttätigen Auf- und Abwicklung eines Anschlusskabels für ein handbetriebenes Elektrogerät geeignet ist. Die Antriebseinrichtung ist als elektrische Wickeleinrichtung vorgesehen, wodurch eine deutlich verbesserte Handhabung erzielbar ist. Durch die gezielte Ansteuerung des elektrischen Motors eröffnen sich bei dem erfindungsgemäßen Kabelwickelsystem neuartige Möglichkeiten der Handhabung. Insbesondere können die Nachteile überwunden werden, die sich aus einem rein mechanisch wirkenden Kabelwickelsystem mit einer Wickelfeder ergeben. Eine Variation der Wickelgeschwindigkeit kann über einfache elektrische Parameter, mit denen der Motor angesteuert wird, erreicht werden. Durch eine Steuereinheit, welche einen mit der Bestromung des Motors bewirkenden Signalausgang besitzt, ergeben sich zahlreiche Gebrauchsvorteile, die im Folgenden aufgeführt sind. Es kann eine separate Steuereinheit vorgesehen sein, die an dem Kabelwickelsystem angeordnet ist. In den meisten Fällen ist es jedoch einfacher und kostensparender, als Steuereinheit die Gerätesteuerung des Elektrogeräts zu nutzen. Mit der Steuereinheit kann der elektrische Motor sowohl hinsichtlich der Drehrichtung als auch hinsichtlich der Drehgeschwindigkeit angesteuert werden. Außerdem ist es möglich, verschiedene Schaltbedingungen für das An- und Abschalten des Motors zu definieren.

So ist es vorteilhaft, wenn die Steuereinheit eine Selbsthalteschaltung aktiviert, mittels welcher der Motor nach der Betätigung des Tastschalters im bestromten Zustand gehalten wird. Hierdurch bleibt dem Benutzer eine permanente Betätigung der Aufwickeltaste während des gesamten Kabeleinzugs erspart. Ein einmaliger Tastendruck reicht. In einer besonders benutzerfreundlichen Ausführungsform ist sogar vorgesehen, dass die Steuereinheit die Selbsthalteschaltung nach Erkennen einer Unterbrechung der Netzstromzufuhr aktiviert. Hierdurch erfolgt ein automatischer Kabeleinzug nach dem Ziehen des Netzsteckers ohne eine weitere Tastenbetätigung des Benutzers. Es ist auch vorteilhaft, wenn die Steuereinheit bei Vorliegen einer Abschaltbedingung die Selbsthalteschaltung deaktiviert und damit die Abschaltung des Motors veranlasst. Hierdurch wird eine selbsttätige Abschaltung des Motors ermöglicht und ein weiterer Verschleiß oder Energieverbrauch verhindert. Die Steuereinheit kann eine Motorstromüberwachung umfassen und als Abschaltbedingung das Überschreiten eines maximalen Grenzstroms in der Stromaufnahme des elektrischen Motors detektieren. Der Aufwickelvorgang wird dann nicht nur abgebrochen, wenn das Anschlusskabel vollständig eingezogen ist und sich der Netzstecker im Kabeleinzugsschacht befindet, sondern auch bei einer Blockade, beispielsweise wenn der Benutzer den Netzstecker festhält oder der Netzstecker an einem Möbelteil festhängt. Altemativ oder zusätzlich kann eine Kabeleinzugserkennung vorgesehen sein, mit der an die Steuereinheit eine Information über die Länge des auf der Kabeltrommel befindlichen oder des von der Kabeltrommel abgewickelten Anschlusskabels lieferbar ist. Die Steuereinrichtung erkennt dann, wenn das Kabel vollständig aufgewickelt ist und kann den Motor selbsttätig abschalten. Die Realisierung einer solchen Kabeleinzugserkennung erfolgt dadurch, dass die Kabeleinzugserkennung einen Sensor aufweist, um eine am Anschlusskabel angeordnete Markierung zu detektieren. Zur Abschaltung des Motors bei vollständig aufgewickeltem Kabel reicht es aus, wenn eine Markierung am Ende des Anschlusskabels im Bereich des Netzsteckers angeordnet ist. Durch eine Markierung etwa 30 cm vor dem netzsteckerseitigen Ende des Anschlusskabels besteht die Möglichkeit, dass die Steuereinrichtung die Drehgeschwindigkeit des Motors während des Einzugs dieser Kabelstrecke reduziert. Hierdurch wird der eingangs beschriebene, nachteilhafte Peitscheneffekt verhindert, da im Endeinzug des Anschlusskabels der am Anschlusskabel angeordnete Netzstecker nicht unkontrolliert in oder um das Elektrogerät schlagen kann. Die Markierung kann beispielsweise ein reflektierendes Band, eine bestimmte Farbe zur Farberkennung oder eine mechanische Markierung sein, die über die Lichtschranke oder ein Photoelement erkannt wird. Die Lichtschranke kann bevorzugt im Kabeleinzugsschacht des Elektrogerätes angeordnet sein, wobei auch die Lichtschranke elektrisch mit der Steuereinheit verbunden ist.

Eine weitere Ausführungsform der Kabeleinzugserkennung umfasst einen Sensor, mit dem eine Detektion der Umdrehungen der Kabeltrommel möglich ist, wobei der Sensor insbesondere eine Lichtschranke, einen Reedkontakt, einen kapazitiven Schalter oder einen Drehgeber am elektrischen Motor aufweist. Wesentlich ist bei dieser Detektionseinrichtung die Lieferung der Information über die Länge des bereits aufgewickelten Anschlusskabels an die Steuereinheit.

Es ist auch vorteilhaft, wenn die Steuereinheit bei angeschaltetem Gerät den Motor mit reduzierter Drehgeschwindigkeit und/oder intermittierend bestromt und dadurch einen Einzug des Anschlusskabels mit einer verringerten Einzugskraft bewirkt. Hierdurch ist das Anschlusskabel während des Betriebs so weit wie möglich im eingezogenen Zustand gehalten und so eine überflüssig ausgezogene Länge vermeidbar. Insbesondere bei einem Staubsauger ergibt sich der Vorteil, dass die überschüssige Länge des Anschlusskabels nicht auf dem Boden aufliegt, der mit dem Staubsauger gereinigt wird. Hierdurch wird eine Autoreversfunktion erzeugt, mit der das Anschlusskabel beispielsweise permanent auf einer geringen Spannung gehalten wird und einen direkten Weg zwischen der Steckdose und dem Staubsauger einnimmt.

Ein weiteres Feature ermöglicht die Umkehrung der Drehrichtung des elektrischen Motors, um ein Ausziehen des Anschlusskabels durch ein motorunterstütztes Abwickeln des Anschlusskabels durch einen Antrieb der Kabeltrommel zu unterstützen. Dabei ist es vorteilhaft, wenn die Steuereinheit ein Ziehen am Anschlusskabel aufgrund der dadurch induzierten Spannung am Motor detektiert und dann den Motor mit umgekehrter Drehrichtung betreibt und dadurch ein Abwickeln des Kabels bewirkt. Hierdurch erhält der Benutzer ohne die Notwendigkeit eines weiteren Bedienschrittes eine Unterstützung beim Abwickeln des Kabels. Dabei ist es sinnvoll, wenn die Steuereinheit den Motor abschaltet, wenn das Kabel vollständig oder um eine vorgegebene Länge abgewickelt ist. Die Ermittlung der abgewickelten Kabelstrecke kann mit der vorbeschriebenen Kabeleinzugserkennung erfolgen.

Ein Ausführungsbeispiel der Erfindung ist am Beispiel eines Bodenstaubsaugers in den Zeichnungen rein schematisch dargestellt und wird nachfolgend näher beschrieben. Es zeigt
- Figur 1: einen Bodenstaubsauger,
- Figur 2: das Kabelwickelsystem des Staubsaugers nach Figur 1,
- Figur 3: das Bedienfeld des Staubsaugers nach Figur 1.

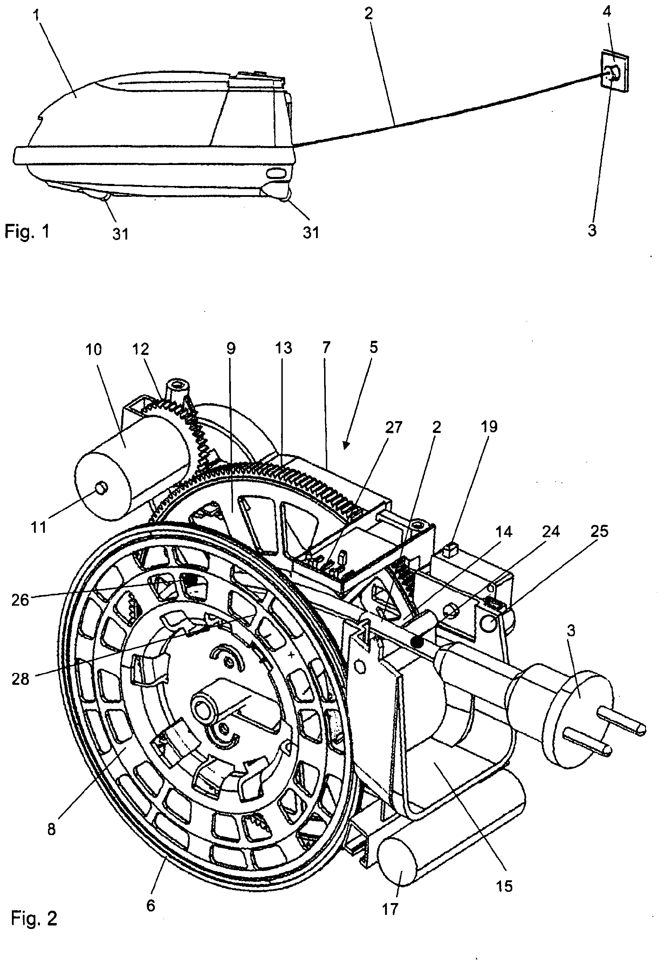

Figur 1 zeigt einen Bodenstaubsauger 1, der in bekannter Weise über ein Anschlusskabel 2 und einen damit verbundenen Netzstecker 3 mit dem Stromnetz (Steckdose 4) kontaktiert ist. Der Staubsauger 1 ist mit dem in Figur 2 gezeigten Kabelwickelsystem 5 ausgestattet. Das Kabelwickelsystem 5 umfasst eine Kabeltrommel 6, die zur Auf- und Abwicklung des Anschlusskabels 2 drehbar in einem Rahmen 7 aufgenommen ist. Die Kabeltrommel 6 weist links- und rechtsseitig jeweilige Trommelscheiben 8 und 9 auf, zwischen denen das Anschlusskabel 2 aufgewickelt wird. Zum Antrieb der Kabeltrommel 6 wird ein elektrischer Motor 10 verwendet, der an dem Rahmen 7 der Kabeltrommel 6 fest angeordnet ist, so dass er eine drehfeste Position gegenüber der Kabeltrommel 6 aufweist. An der Antriebswelle 11 des Motors 10 ist ein Zahnrad 12 befestigt, welches mit einem Zahnkranz 13 an dem Außenumfang einer Trommelscheibe 9 kämmt. Zahnkranz 13 und Zahnrad 12 sind so dimensioniert, dass sich ein Übersetzungsverhältnis von 1 zu 7 bis 1 zu 20, vorzugsweise ca. 1 zu 13 ergibt. Die Übersetzung ist so groß gewählt, damit das Anschlusskabel 2 relativ langsam aufgewickelt wird. Das Anschlusskabel 2 läuft durch die Öffnung 14 eines Kabeleinzugsschachts 15, welcher nach Beendigung des Aufwickelvorgangs den Netzstecker 3 aufnimmt.

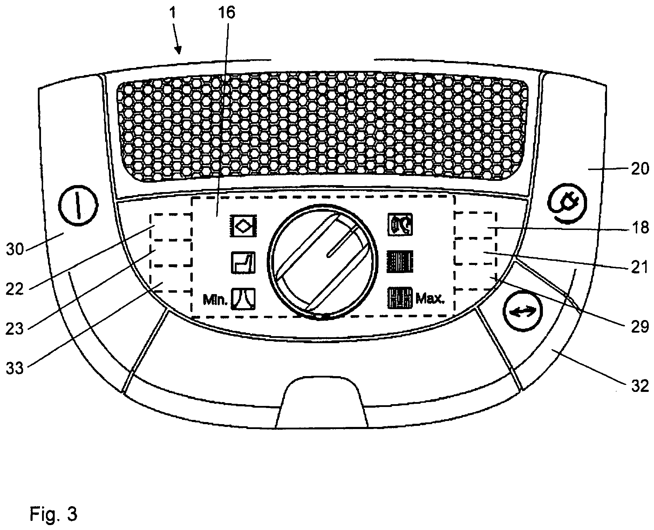

Das An- und Abschalten des Motors 10 erfolgt über den Signalausgang einer Steuereinheit 16, die in der Gerätesteuerung integriert ist. Figur 3 zeigt das Bedienfeld des Staubsaugers 1, in dem die darunter liegende Steuereinheit 16 als gestrichelter Kasten symbolisiert ist. Damit die Steuereinheit 16 den Motor 10 auch bei gezogenem Netzstecker 3 anschalten und damit das Anschlusskabel 2 aufwickeln kann, besitzt das Kabelwickelsystem 5 einen autarken Energiespeicher in Form eines Akkumulators 17. Vorzugsweise wird ein wiederaufladbarer Litium-Ionen-Akku mit einer Nennspannung von ca. 3,6 V verwendet. Die Kapazität des Akkus 17 und der Stromverbrauch des Motors 10 sind so ausgelegt, dass bei voll geladenem Akku 17 etwa 50 bis 100 Einspulzyklen für ein vollständig abgewickeltes Anschlusskabel 2 durchgeführt werden können. Damit der Akku 17 bei kontaktiertem Netzstecker 3 wieder aufgeladen werden kann, ist eine integrierte Ladeschaltung 18 vorgesehen. Die Steuereinheit 16 erkennt, wenn Netzspannung anliegt und veranlasst dann die Aufladung des Akkus 17.

Am Kabelwickelsystem 5 ist ferner ein Tastschalter 19 angeordnet, über den der Bediener den Aufwickelvorgang aktivieren kann. Die Betätigung des Tastschalters 19 erfolgt über eine Fußtaste 20. Damit der Benutzer die Fußtaste 20 nicht während des gesamten Aufwickelvorgangs gedrückt halten muss, ist eine sogenannte Tippfunktion vorgesehen. Hierzu ist der Tastschalter 19 nichtrastend ausgebildet und der Stromkreis vom Akku 17 zum Motor wird über ein Selbsthalterelais 21 geschlossen, welches von der Steuereinheit 16 nach einmaliger Betätigung der Taste 20 bestromt wird. Alternativ zur Initialisierung des Aufwickelvorgangs über die Fußtaste 20 kann eine erste Schaltung 22 vorgesehen sein, mit deren Hilfe die Steuereinheit 16 eine Unterbrechung der Netzspannungszufuhr und damit das Herausziehen des Netzsteckers 3 erkennt und dann das Selbsthalterelais 21 selbsttätig bestromt. In jedem Fall muss der Aufwickelvorgang beendet werden, wenn das Kabel 2 vollständig aufgewickelt ist und sich der Stecker 3 im Kabeleinzugsschacht 15 befindet. In einfachster Weise ist dies durch eine weitere Schaltung 23 möglich, mit der die Stromaufnahme des Motors 10 gemessen werden kann. Durch ein Klemmen des Anschlusskabels 2 oder am Ende des Aufwickelvorgangs ist die Kabeltrommel 6 blockiert, d. h., der Motor 10 dreht gegen einen erhöhten Widerstand. Hierdurch erhöht sich der Motorstrom, den die weitere Schaltung 23 sensiert und an die Steuereinheit 16 weitergibt. Die Steuereinheit 16 schaltet dann, wenn die Stromaufnahme des elektrischen Motors 10 einen maximalen Grenzstrom überschreitet, das Selbsthalterelais 21 und damit den Motor 10 ab. Alternativ oder zusätzlich kann eine Kabeleinzugserkennung vorgesehen sein, von der die Steuereinheit 16 eine Information über die Länge des auf der Kabeltrommel 6 befindlichen oder des von der Kabeltrommel 6 abgewickelten Anschlusskabels 2 lieferbar ist. Eine erste Möglichkeit zum Aufbau einer Kabeleinzugserkennung besteht darin, am Kabel 2 mindestens eine Markierung 24 anzuordnen, die über einen geeigneten Sensor 25 erkennbar ist. Die Markierung kann beispielsweise ein reflektierendes Band, eine bestimmte Farbe zur Farberkennung oder eine magnetische oder mechanische Markierung sein, als Sensor 25 können dann ein Reed-Kontakt, eine Lichtschranke, ein Photoelement oder geeignete Taster verwendet werden. Der Sensor 25 ist bevorzugt im Kabeleinzugsschacht 15 des Staubsaugers 1 angeordnet und mit einem Signaleingang der Steuereinheit 16 verbunden. Erkennt die Steuereinheit 16 hierüber eine erste Markierung 24 am netzsteckerseitigen Ende des Anschlusskabels 2, so schaltet sie den Motor 10 über das Selbsthalterelais 21 ab.

In einer bevorzugten Ausführungsform wird die Kabeleinzugserkennung entweder alternativ (bei Verwendung der weiteren Schaltung 23 zum Aufbau der Tippfunktion) oder zusätzlich zur Realisierung eines sogenannten Sanfteinzugs verwendet. Dann ist ca. 30 cm vor dem netzsteckerseitigen Ende des Kabels 2 eine weitere Markierung 26 angeordnet. Wird zum Aufbau der Tippfunktion ebenfalls der Sensor 25 samt erster Markierung 24 verwendet, müssen der Sensor 25 bzw. die Steuereinheit 16 in der Lage sein, die beiden Markierungen 24 und 26 voneinander unterscheiden zu können. Wenn dann während des Aufwickelvorgangs die Markierung 26 den Sensor 24 passiert hat, reduziert die Steuereinheit 16 die Drehgeschwindigkeit des Motors ca. um den Faktor 2 bis 3 und sorgt für einen verlangsamten Einzug der letzten Kabelstrecke.

Eine andere Form der Kabeleinzugserkennung (für die Tippfunktion und/oder den Sanfteinzug) umfasst einen Sensor, mit dem eine Detektion der Umdrehungen der Kabeltrommel 6 möglich ist, wobei der Sensor insbesondere eine Lichtschranke (nicht dargestellt), einen Reedkontakt 27, einen kapazitiven Schalter (nicht dargestellt) oder einen Drehgeber (nicht dargestellt) an der Kabeltrommel oder am elektrischen Motor aufweist. Die Lichtschranke kann beispielsweise am Zahnkranz der Kabeltrommel angebracht sein, um bereits erfolgte Einzugsumdrehungen der Kabeltrommel zu detektieren. Reedkontakte sowie kapazitive Schalter bilden berührungslose Signalgeber, bei denen beispielsweise ein kleiner Permanentmagnet 28 an der Kabeltrommel 6 angebracht ist und an dem Reedkontakt 27 oder dem kapazitiven Schalter vorbeiläuft. Der Kontakt 27 bzw. der Schalter liefert der Steuereinheit 16 einen Schaltimpuls, mit dem die Umdrehungsanzahl der Kabeltrommel auszählbar ist. Bei Verwendung einer solchen Kabeleinzugserkennung ist es zweckmäßig, dass die Steuereinheit 16 einen Datenspeicher 29 aufweist, mit dem die detektierten Umdrehungen der Kabeltrommel 6 abspeicherbar sind.

Mit den vorhandenen Komponenten kann auch eine sogenannte Autoreversfunktion implementiert werden. Dabei bestromt die Steuereinheit 16 bei eingeschaltetem Gerät (Netzstecker 3 ist kontaktiert und der rastende EIN/AUS-Schalter 30 ist eingeschaltet) den Motor 10 mit reduzierter Drehgeschwindigkeit und/oder intermittierend und bewirkt dadurch einen Einzug des Anschlusskabels 2 mit einer verringerten Einzugskraft. Die permanente Einzugskraft ist dabei derart gering auszulegen, dass der Staubsauger 1 nicht selbsttätig in Richtung der Steckdose 4 gezogen wird, sie muss also geringer als die bei Glattböden auf die Räder 31 wirkende Reibkraft sein. Der elektrische Motor 10 gibt folglich permanent nur die Länge an Anschlusskabel 2 frei, die zwischen dem Staubsauger 1 und der Steckdose 4 erforderlich ist. Um dem Bediener des Staubsaugers 1 ein Abschalten der Autoreversfunktion zu ermöglichen, kann auf dem Elektrogerät ein entsprechender Schalter 32 vorgesehen sein, mit dem die Autoreversfunktion aktivierbar und wieder abschaltbar ist. Dieser kann, wie in der Figur 3 gezeigt, im Bereich der Fußtaste 20 angeordnet sein. Eine weitere, in den Figuren nicht gezeigte Variante besitzt einen entsprechenden Schalter im Handgriff des Staubsaugers 1. Die Autoreversfunktion kann damit ein- und ausgeschaltet werden, ohne dass der Bediener den Handgriff loslassen muss.

Wenn die Drehrichtung des elektrischen Motors 10 mit Hilfe der Steuereinheit 16 umkehrbar ist, kann der Benutzer beim Herausziehen des Anschlusskabels 2 durch ein motorisches Abwickeln unterstützt werden. Dieses selbsttätige Abwickeln bzw. Kabelspenden kann durch Betätigung eines Bedienknopfes (nicht dargestellt) oder in vorteilhafter Weise automatisch erfolgen. In letzterem Fall muss eine dritte Schaltung 33 vorgesehen sein, über die die Steuereinheit 16 ein Ziehen am Anschlusskabel 2 aufgrund der dadurch induzierten Spannung am Motor 10 detektiert. Dabei ist es sinnvoll, wenn die Steuereinheit 16 den Motor 10 abschaltet, wenn das Kabel 2 vollständig oder um eine vorgegebene Länge abgewickelt ist. Die Ermittlung der abgewickelten Kabelstrecke kann mit einer der vorbeschriebenen Einrichtungen zur Kabeleinzugserkennung erfolgen.

## Patentansprüche

1. Elektrogerät mit einem Kabelwickelsystem (2), insbesondere handbetriebenes Elektrogerät wie ein Staubsauger (1) oder dergleichen, das eine Kabeltrommel (6) aufweist, die zur Auf- und Abwicklung eines Anschlusskabels (2) drehbar gelagert ist, wobei zum Antrieb der Kabeltrommel (6) eine Antriebseinrichtung mit einem elektrischen Motor (10) vorgesehen ist, der mit der Kabeltrommel (6) antreibend in Wirkverbindung steht,
**dadurch gekennzeichnet,**
**dass** eine Steuereinheit (16) vorgesehen ist, welche einen mit der Bestromung des Motors (10) bewirkenden Signalausgang besitzt und welche den Motor (10) anschaltet und damit das Anschlusskabel (2) aufwickelt.

2. Elektrogerät nach Anspruch 1,
**dadurch gekennzeichnet,**
**dass** die Steuereinheit (16) eine Selbsthalteschaltung (21) aktiviert, mittels welcher der Motor (10) nach der Betätigung eines nichtrastenden Tastschalters (19) im bestromten Zustand gehalten wird.

3. Elektrogerät nach Anspruch 2,
**dadurch gekennzeichnet,**
**dass** die Steuereinheit (16) die Selbsthalteschaltung (21) bei Betätigung des Tastschalters (19) aktiviert.

4. Elektrogerät nach Anspruch 2,
**dadurch gekennzeichnet,**
**dass** die Steuereinheit (16) die Selbsthalteschaltung (21) nach Erkennen einer Unterbrechung der Netzstromzufuhr aktiviert.

5. Elektrogerät nach einem der Ansprüche 2 bis 4,
**dadurch gekennzeichnet,**
**dass** die Steuereinheit (16) bei Vorliegen einer Abschaltbedingung die Selbsthalteschaltung (21) deaktiviert und damit die Abschaltung des Motors (10) veranlasst.

6. Elektrogerät nach Anspruch 5,
**dadurch gekennzeichnet,**
**dass** die Steuereinheit (16) eine Motorstromüberwachung (23) umfasst und als Abschaltbedingung das Überschreiten eines maximalen Grenzstroms in der Stromaufnahme des elektrischen Motors (10) detektiert.

7. Elektrogerät nach mindestens einem der vorhergehenden Ansprüche,
**dadurch gekennzeichnet,**
**dass** eine Kabeleinzugserkennung vorgesehen ist, mit der an die Steuereinheit (16) eine Information über die Länge des auf der Kabeltrommel (6) befindlichen oder des von der Kabeltrommel (6) abgewickelten Anschlusskabels (2) lieferbar ist.

8. Elektrogerät nach Anspruch 7,
**dadurch gekennzeichnet,**
**dass** die Kabeleinzugserkennung einen Sensor (25) aufweist, um mindestens eine am Anschlusskabel (2) angeordnete Markierung (24, 26) zu detektieren.

9. Elektrogerät nach Anspruch 8,
**dadurch gekennzeichnet,**
**dass** eine Markierung (24) am Ende oder etwa 30 cm vor dem netzsteckerseitigen Ende des Anschlusskabels (2) angeordnet ist, und dass im Bereich des Kabelaustritts aus dem Elektrogerät ein Kabeleinzugsschacht (15) ausgebildet ist, und dass der Sensor (25) im Kabeleinzugsschacht (15) angeordnet ist.

10. Elektrogerät nach einem der Ansprüche 7 bis 9,
**dadurch gekennzeichnet,**
**dass** die Kabeleinzugserkennung einen Sensor umfasst, mit dem eine Detektion der Umdrehungen der Kabeltrommel (6) möglich ist, wobei der Sensor insbesondere eine Lichtschranke, einen Reedkontakt (27), einen kapazitiven Schalter oder einen Drehgeber an der Kabeltrommel (6) oder am elektrischen Motor (10) aufweist.

11. Elektrogerät nach Anspruch 10,
**dadurch gekennzeichnet,**
**dass** die Steuereinheit (16) einen Datenspeicher (29) aufweist, mit dem die detektierten Umdrehungen der Kabeltrommel (6) abspeicherbar sind.

12. Verfahren zum Betreiben eines Elektrogeräts nach mindestens einem der vorhergehenden Ansprüche,
**dadurch gekennzeichnet,**
**dass** die Steuereinheit (16) bei eingeschaltetem Gerät den Motor (10) mit reduzierter Drehgeschwindigkeit und/oder intermittierend bestromt und dadurch einen Einzug des Anschlusskabels (2) mit einer verringerten Einzugskraft bewirkt.

13. Verfahren zum Betreiben eines Elektrogeräts nach mindestens einem der vorhergehenden Ansprüche 1 bis 11, **dadurch gekennzeichnet,**
**dass** die Drehrichtung des elektrischen Motors (10) umkehrbar ist, um ein Ausziehen des Anschlusskabels (2) durch ein motorisches Abwickeln des Anschlusskabels (2) durch einen Antrieb der Kabeltrommel (6) zu unterstützen.

14. Verfahren zum Betreiben eines Elektrogeräts nach Anspruch 13,
**dadurch gekennzeichnet,**
**dass** die Steuereinheit (16) ein Ziehen am Anschlusskabel (2) aufgrund der dadurch induzierten Spannung am Motor (10) detektiert und dann den Motor (10) mit umgekehrter Drehrichtung betreibt und dadurch ein Abwickeln des Kabels (2) bewirkt.

15. Verfahren zum Betreiben eines Elektrogeräts nach mindestens einem der Ansprüche 1 bis 11,
**dadurch gekennzeichnet,**
**dass** die Steuereinrichtung (16) die Drehgeschwindigkeit des Motors (10) während des Einzugs der ungefähr letzten 30 cm des Anschlusskabels (2) reduziert.

## Claims

1. Electrical device comprising a cable coiling system (2), in particular a hand-operated electrical device such as a vacuum cleaner (1) or the like, which has a cable reel (6) which is rotatably mounted for winding and unwinding a connecting cable (2), a drive apparatus comprising an electric motor (10) being provided in order to drive the cable reel (6), which motor is in a driving operative connection with said cable reel (6),
**characterised in that**
a control unit (16) is provided which has a signal output which operates by energising the motor (10) and turns on the motor (10) and thereby winds the connecting cable (2).

2. Electrical device according to claim 1,
**characterised in that**
the control unit (16) activates a self-holding circuit (21) by means of which the motor (10) is held in the energised state after a non-locking pushbutton (19) has been pressed.

3. Electrical device according to claim 2,
**characterised in that**
the control unit (16) activates the self-holding circuit (21) when the pushbutton (19) is pressed.

4. Electrical device according to claim 2,
**characterised in that**
the control unit (16) activates the self-holding circuit (21) upon detection of an interruption to the mains power supply.

5. Electrical device according to any of claims 2 to 4,
**characterised in that**
the control unit (16) deactivates the self-holding circuit (21) when a turn-off condition is present and thereby causes the motor (10) to turn off.

6. Electrical device according to claim 5,
**characterised in that**
the control unit (16) comprises a motor current monitoring means (23) and detects when a maximum limit current in the current consumption of the electric motor (10) has been exceeded as a turn-off condition.

7. Electrical device according to at least one of the preceding claims,
**characterised in that**
a cable retraction recognition means is provided, by means of which information on the length of the connecting cable (2) located on the cable reel (6) or unwound from the cable reel (6) can be delivered to the control unit (16).

8. Electrical device according to claim 7,
**characterised in that**
the cable retraction recognition means has a sensor (25) in order to detect at least one marker (24, 26) arranged on the connecting cable (2).

9. Electrical device according to claim 8,
**characterised in that**
a marker (24) is arranged at the end or approximately 30 cm from the mains plug end of the connecting cable (2), and **in that** a cable retraction tray (15) is formed in the region where the cable exits the electrical device, and **in that** the sensor (25) is arranged in the cable retraction tray (15).

10. Electrical device according to any of claims 7 to 9,
**characterised in that**
the cable retraction recognition means comprises a sensor by means of which it is possible to detect the revolutions of the cable reel (6), the sensor having in particular a light barrier, a reed contact (27), a capacitive switch or a rotary encoder on the cable reel (6) or on the electric motor (10).

11. Electrical device according to claim 10,
**characterised in that**
the control unit (16) has a data store (29) by means of which the detected revolutions of the cable reel (6) can be saved.

12. Method for operating an electrical device according to at least one of the preceding claims,
**characterised in that**
the control unit (16) energises the motor (10) at a reduced rotational speed and/or intermittently when the device is turned on and thereby effects a retraction of the connecting cable (2) at a reduced retraction force.

13. Method for operating an electrical device according to at least one of the preceding claims 1 to 11,
**characterised in that**
the rotational direction of the electric motor (10) can be reversed, in order to facilitate pulling out of the connecting cable (2) by unwinding the connecting cable (2) in a motor-driven manner by driving the cable reel (6).

14. Method for operating an electrical device according to claim 13,
**characterised in that**
the control unit (16) detects a pull on the connecting cable (2) as a result of the thereby induced voltage at the motor (10) and then operates the motor (10) in a reversed rotational direction and thus effects an unwinding of the cable (2).

15. Method for operating an electrical device according to at least one of claims 1 to 11,
**characterised in that**
the control apparatus (16) reduces the rotational speed of the motor (10) during the retraction of the last approximately 30 cm of the connecting cable (2).

## Revendications

1. Appareil électrique avec un système d'enroulement de câble (2), en particulier appareil électrique commandé manuellement tel qu'un aspirateur (1) ou similaire, qui présente un tambour de câble (6) qui est supporté en rotation pour l'enroulement et le déroulement d'un câble de raccordement (2), dans lequel, pour l'entraînement du tambour de câble (6), il est prévu un système d'entraînement avec un moteur (10) électrique qui est en liaison opératoire en entraînement avec le tambour de câble (6),
**caractérisé en ce**
**qu'**il est prévu une unité de commande (16) qui possède une sortie de signal fonctionnant par l'alimentation électrique du moteur (10) et qui met en circuit le moteur (10) et enroule ainsi le câble de raccordement (2).

2. Appareil électrique selon la revendication 1,
**caractérisé en ce que**
l'unité de commande (16) active un circuit autobloqueur (21) au moyen duquel le moteur (10) est maintenu dans l'état alimenté en courant après l'actionnement d'un bouton-poussoir (19) qui ne se verrouille pas.

3. Appareil électrique selon la revendication 2,
**caractérisé en ce que**
l'unité de commande (16) active le circuit autobloqueur (21) lors de l'actionnement du bouton-poussoir (19).

4. Appareil électrique selon la revendication 2,
**caractérisé en ce que**
l'unité de commande (16) active le circuit autobloqueur (21) après la détection d'une interruption de l'amenée de courant du secteur.

5. Appareil électrique selon l'une des revendications 2 à 4,
**caractérisé en ce que**,
en présence d'une condition de coupure, l'unité de commande (16) désactive le circuit autobloqueur (21) et cause ainsi la coupure du moteur (10).

6. Appareil électrique selon la revendication 5,
**caractérisé en ce que**
l'unité de commande (16) comprend une surveillance du courant de moteur (23) et détecte en tant que condition de coupure le dépassement d'un courant limite maximal dans l'absorption de courant du moteur (10) électrique.

7. Appareil électrique selon au moins l'une des revendications précédentes,
**caractérisé en ce**
**qu'**il est prévu une détection de rentrée de câble avec laquelle une information peut être fournie à l'unité de commande (16) sur la longueur du câble de raccordement (2) situé sur le tambour de câble (6) ou déroulé à partir du tambour de câble (6).

8. Appareil électrique selon la revendication 7,
**caractérisé en ce que**
la détection de rentrée de câble présente un capteur (25) pour détecter au moins un marquage (24, 26) disposé sur le câble de raccordement (2).

9. Appareil électrique selon la revendication 8,
**caractérisé en ce**
**qu'**un marquage (24) est disposé à l'extrémité ou environ 30 cm avant l'extrémité, côté fiche secteur, du câble de raccordement (2), et **en ce que**, dans la zone de la sortie du câble à partir de l'appareil électrique, il est constitué une fente de rentrée de câble (15), et **en ce que** le capteur (25) est disposé dans la fente de rentrée de câble (15).

10. Appareil électrique selon l'une des revendications 7 à 9,
**caractérisé en ce que**
la détection de rentrée de câble comprend un capteur avec lequel une détection des rotations du tambour de câble (6) est possible, dans lequel le capteur présente en particulier une barrière lumineuse, un contact à lame souple (27), un commutateur capacitif ou un encodeur sur le tambour de câble (6) ou sur le moteur (10) électrique.

11. Appareil électrique selon la revendication 10,
**caractérisé en ce que**
l'unité de commande (16) présente une mémoire de données (29) avec laquelle les rotations détectées du tambour de câble (6) peuvent être enregistrées.

12. Procédé de fonctionnement d'un appareil électrique selon au moins l'une des revendications précédentes,
**caractérisé en ce que**,
quand l'appareil est mis en circuit, l'unité de commande (16) alimente en courant le moteur (10) avec une vitesse de rotation réduite et/ou de façon intermittente, et provoque de ce fait une rentrée du câble de raccordement (2) avec une force de rentrée réduite.

13. Procédé de fonctionnement d'un appareil électrique selon au moins l'une des revendications précédentes 1 à 11,
**caractérisé en ce que**
le sens de rotation du moteur (10) électrique peut être inversé pour assister une extraction du câble de raccordement (2) par un déroulement motorisé du câble de raccordement (2) par un entraînement du tambour de câble (6).

14. Procédé de fonctionnement d'un appareil électrique selon la revendication 13,
**caractérisé en ce que**
l'unité de commande (16) détecte un traction sur le câble de raccordement (2) en raison de la tension ainsi induite sur le moteur (10) et puis fait fonctionner le moteur (10) avec un sens de rotation inversé et provoque ainsi un déroulement du câble (2).

15. Procédé de fonctionnement d'un appareil électrique selon au moins l'une des revendications précédentes 1 à 11,
**caractérisé en ce que**
le système de commande (16) réduit la vitesse de rotation du moteur (10) pendant la rentrée des environ 30 derniers cm du câble de raccordement (2).
